# EUROPEAN PATENT APPLICATION

(11) **EP 1 916 838 A1**
(43) Date of publication of application: **30.04.2008**
(21) Application number: 07251488.8
(22) Date of filing: 04.04.2007
(51) Int. Cl.: H04N 5/225, H04N 13/00

(54) **Integrated multiple imaging device**

(30) Priority: 26.10.2006 US 553335
(71) Applicant: FLUKE CORPORATION, Everett Washington 98206 (US)
(72) Inventor: Wisted, M. Jeffrey, Burnsville, Minnesota 55337 (US)
(74) Representative: Howe, Steven

(57) **Abstract**

In some embodiments, an imaging system can include a first imaging device and a second imaging device. The first imaging device can be configured to capture a first image from a first image path. The first imaging device can include a first optical element and a first housing. The second imaging device can be configured to capture a second image from a second image path. The second image path can intersect with, and can be non-parallel to, the first image path. The second imaging device can include a second optical element and a second housing. Many additional embodiments are possible.

## Description

### TECHNICAL FIELD

This document relates to imaging systems and, more particularly, to imaging systems configured to gather images from multiple directions.

### BACKGROUND

Imaging systems configured to gather images from multiple directions are used in a wide variety of applications. For instance, many surveillance and security cameras gather images from different directions via multiple imaging devices. In some cases, users can switch from one imaging device to another in order to view different images (e.g., to view a particular object from different vantage points). In some cases, the imaging system can automatically switch between imaging devices to provide the user with a continuous sampling of all of the areas being monitored. Some imaging systems are configured to gather images from different directions via a motorized pivoting gimbal system having a single lens.

Often, the structure of the application that will include the imaging system plays an important role in the design of the imaging system. Sometimes, it is desirable that surveillance and security cameras be relatively small in order that the monitoring might be done in secret. Likewise, sometimes the structure that will house an imaging system is irregularly shaped because of the location of other physical components of the particular application. In such instances, the imaging devices of the imaging system must be oriented in order to accommodate the structure's irregular shape.

In some cases, the particular application that will include the imaging system is capable of carrying only a certain amount of weight. For example, applications that carry imaging systems airborne are limited in the weight they can carry by the characteristics of the applications, such as the size of the motor or the aerodynamics of the structure. As a result, the imaging system must be light enough to accommodate such applications' weight constraints. Moreover, weight constraints can be especially important in imaging systems capable of gathering infrared images. Such systems can weigh substantially more than systems designed to gather only visible light images.

### SUMMARY

In one aspect, an imaging system includes a first imaging device and a second imaging device. The first imaging device is configured to capture a first image from a first image path. The first imaging device includes a first optical element and a first housing. The second imaging device is configured to capture a second image from a second image path. The second image path intersects with and is non-parallel to the first image path. The second imaging device includes a second optical element and a second housing.

In a second aspect, an assembly for gathering images includes a first imaging device, a second imaging device, a first plurality of sensors, and a second plurality of sensors. The first imaging device is configured to gather light from a first image path. The first imaging device includes a first optical element and a first housing. The second imaging device is configured to gather light from a second image path. The second image path intersects with and is non-parallel to the first image path. The second imaging device includes a second optical element and a second housing. The first imaging device is configured to focus the light gathered from the first image path on the first plurality of sensors. The first plurality of sensors is configured to create a first electrical signal that corresponds to the light from the first image path. The second imaging device is configured to focus the light gathered from the second image path on the second plurality of sensors. The second plurality of sensors is configured to create a second electrical signal that corresponds to the light from the second image path.

In a third aspect, an imaging system includes a first imaging device and a second imaging device. The first imaging device is configured to capture a first image from a first image path. The first imaging device includes a first infrared optical element and a first housing. The first image path is generally unobstructed by components other than those associated with the first imaging device. The second imaging device is configured to capture a second image from a second image path. The second imaging device includes a second infrared optical element and a second housing. The second housing is integrally formed of the same material as the first housing. The second image path intersects with the first image path. The second image path is non-parallel to the first image path. The second image path is generally unobstructed by components other than those associated with the second imaging device.

In a fourth aspect, a system includes a first detection device and a second detection device. The first detection device is configured to gather electromagnetic energy from a first energy path. The first detection device includes a first housing. The second detection device is configured to gather electromagnetic energy from a second energy path. The second energy path intersects with and is non-parallel to the first energy path. The second detection device comprising a second housing.

Embodiments of the present invention may include one or more of the following features. The first housing and the second housing may be integrally formed of the same material. Some imaging devices can include additional optical elements. Some optical elements can be infrared optical elements. Image paths can be generally unobstructed by components other than those associated with the first imaging device. Some embodiments can include three or more imaging devices, each including an optical element and a housing. In some embodiments, a third image can be captured from a third image path, which intersects with and is non-parallel to either or both of the other image paths. In some such embodiments, the first, second, and third image paths are coplanar. In some embodiments, the focal lengths of the imaging devices can differ from one another. Some embodiments can include an air vehicle. Some detection devices include optical elements. In some embodiments, energy paths are generally unobstructed by components other than those associated with the corresponding detection devices. Some embodiments include three or more detection devices, each including a housing. In some embodiments, electromagnetic energy can be captured from a third energy path. In some such embodiments, the third energy path intersects with and is non-parallel to the either or both of the other energy paths. In some embodiments, first, second, and third energy paths are coplanar.

Embodiments of the present invention may have one or more of the following advantages. In some embodiments, the imaging system consumes less space than conventional imaging systems. In some embodiments, the imaging system weighs less than conventional imaging systems. In some embodiments, the imaging system is able to be oriented in a greater variety of orientations than conventional imaging systems. In some embodiments, the imaging system requires less material to manufacture than conventional imaging systems. Some embodiments may be able to be substituted for larger motorized pivoting gimbal systems having a single lens. Such embodiments may eliminate the power, mass, and volume required by the motorized pivoting gimbal systems. Such embodiments may provide enhanced reliability by eliminating moving parts.

### BRIEF DESCRIPTION OF THE FIGURES

The present invention will be described, by way of example, with reference to the accompanying drawings, in which:
FIG. 1 is a perspective view of an exemplary air vehicle;
FIG. 2 is a perspective view of an exemplary imaging device configuration for use in some imaging systems;
FIG. 3 is a schematic, cross-sectional view of an imaging device configuration similar to that of FIG. 2;
FIG. 4 is a perspective view of an exemplary imaging device configuration for use in some imaging systems;
FIG. 5 is a schematic, cross-sectional view of an imaging device configuration similar to that of FIG. 4; and,
FIG. 6 is a schematic, cross-sectional view of an exemplary imaging device configuration for use in some imaging systems.

### DETAILED DESCRIPTION OF ILLUSTRATIVE EMBODIMENTS

The following detailed description of illustrative embodiments should be read with reference to the figures, in which like elements in different figures are numbered identically. The figures depict illustrative embodiments and are not intended to limit the scope of the invention. Rather, the present invention is defined solely by the claims.

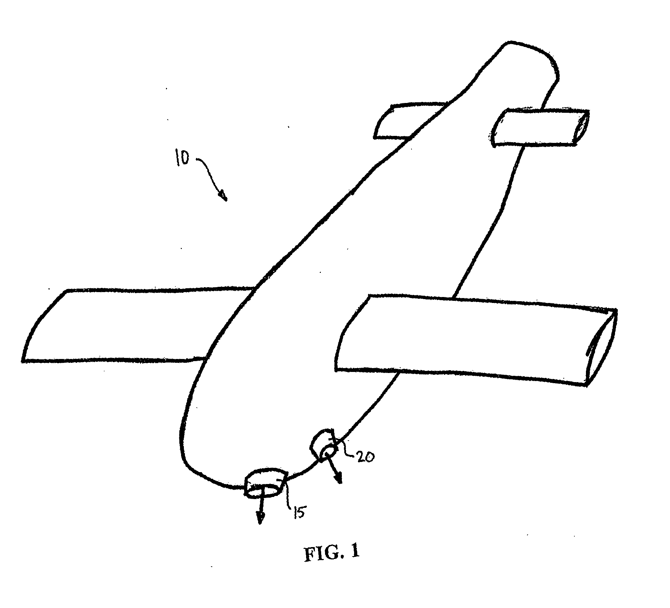

FIG. 1 shows a perspective view of an exemplary air vehicle 10. Air vehicle 10 can be an unmanned micro air vehicle having a wingspan of approximately 24-30 inches (61-76 centimeters) and a length of approximately 24 inches (61 centimeters). Micro air vehicles can be remotely controlled and battery-powered and can fly approximately 200-250 feet (61-76 meters) off the ground. Often, such micro air vehicles are configured to be relatively small in order to avoid being detected while monitoring. In some embodiments, the air vehicle 10 is substantially larger than a micro air vehicle.

The air vehicle 10 of FIG. 1 has an imaging system that includes two imaging devices 15, 20, along with corresponding sensors, processing equipment, and/or transmitters. In some embodiments, imaging systems of air vehicles can have more than two imaging devices, such as three, four, or five. Imaging devices in imaging systems can be oriented in a variety of ways. The imaging devices 15, 20 of FIG. 1 are oriented to gather images in two different directions. As an example of how such an imaging system is used, the air vehicle 10 can fly over a plot of land gathering relatively wide-angled images via imaging device 15. When an object is spotted via imaging device 15 that is deemed worthy of further inspection, the air vehicle 10 can circle that object such that imaging device 20 gathers magnified images of the object on a more continuous basis.

The imaging devices 15, 20 themselves can possess a variety of characteristics. Each imaging device 15, 20 can include a housing and one or more optical elements positioned within the housing. In some embodiments, the housing can be a barrel. In some embodiments, the housing can have a polygonal, circular, or other suitable cross-section. The optical elements can be disks such as those known in the art (e.g., concave lenses, convex lenses, etc.). In some embodiments, multiple housings can be integrally formed of the same material. In some embodiments, the optical elements are coated with one or more correction coatings (e.g., aberration correction coating, color correction coating, thermal correction coating, etc.). The imaging devices 15, 20 are configured to focus light on their corresponding sensors. In some embodiments, a single optical element is able to focus light on the corresponding sensors in a proper manner. In some embodiments, two or more optical elements are used to focus light on the corresponding sensors in a proper manner. In some embodiments, one or more of the imaging devices 15, 20 have a fixed focal length. In some embodiments, one or more of the imaging devices 15, 20 have the ability to zoom in and out. In some embodiments, one or more of the imaging devices 15, 20 are fixed-focus imaging devices, configured to focus on any object that is more than a specified distance away from the imaging device.

In many embodiments, the characteristics of one imaging device 15 in an imaging system differ from those of the other imaging device 20 in order to provide the viewer with a variety of vantage points. For instance, in some embodiments, imaging device 15 is a fixed-focus imaging device, configured to focus on any object more than 10 feet (about 3m) away, while imaging device 20 is a fixed-focus imaging device, configured to focus on any object more than 15 feet (about 4.5m) away.

The imaging devices 15, 20 can cooperate with a variety of components. In some embodiments, the imaging devices 15, 20 can cooperate with sensors. In such embodiments, the imaging devices 15, 20 can focus light onto the sensors, which can then create corresponding electrical signals. In some embodiments, processing equipment can create images based on the electrical signals. In such embodiments, the images can be transmitted to display equipment at a workstation for display to users, and/or the images can be displayed to a user contemporaneously. In some embodiments, the electrical signals can be stored (e.g., in a micro-hard disk drive). In some such embodiments, the electrical signals can be retrieved from storage in order to view images at a later time. In some embodiments, a single set of processing circuitry and a single set of output elements can accommodate the multiple imaging devices. Some such embodiments are discussed in a U.S. Patent Application No. 11/553,373 titled "Multiple View Infrared Imaging System," which is commonly owned.

In some embodiments, external factors, such as characteristics of the air vehicle 10, place substantial restraints on the type of equipment that can be incorporated into imaging systems, as well as on the orientation of that equipment. Weight constraints may limit the types of imaging devices and/or other equipment from being included in particular applications. Also, some applications can afford to allocate only a small amount of space (e.g., 4" x 1.5" x 1.5" or 10cm x 3.8cm x 3.8cm for some micro air vehicles) to their imaging systems. Similarly, the positioning of other equipment in some applications can limit the number of imaging device orientations that result in clear image paths for the imaging devices. For instance, one would likely want to avoid orientations in which an imaging device's image path is obstructed by an air vehicle's wing or another imaging device. Likewise, in some applications, certain equipment must be located in certain positions (e.g., motor electronics often must be located near an air vehicle's motor), which makes it difficult for imaging system equipment to be located in those certain positions. Though such constraints have been discussed in connection with air vehicles, the same or similar constraints may be present in any other application involving imaging systems. Imaging systems are often configured based on the weight, space, and orientation constraints of a given application.

In some embodiments, the imaging devices 15, 20 can be equipped to gather infrared images. The optical elements of the imaging devices 15, 20 can be infrared optical elements, and the corresponding sensors can be infrared sensors (e.g., a 160x120 or 320x240 microbolometer array). In some instances, such infrared systems can weigh approximately ten times more than systems for imaging visible light, which means that weight constraints can assume even greater importance in infrared systems.

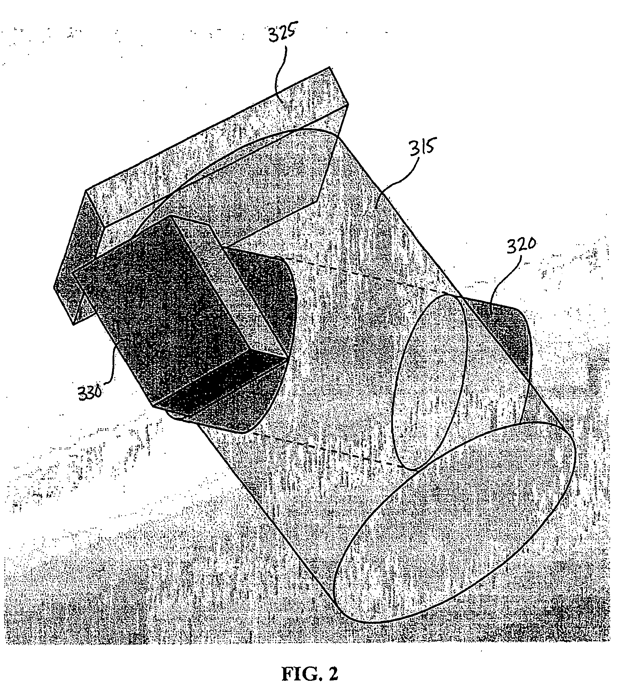

FIG. 2 shows a perspective view of two imaging devices 315, 320, along with their corresponding sensors 325, 330, that can be used in some imaging systems. As in FIG. 1, the respective image paths of the imaging devices 315, 320 are non-parallel. For example, imaging device 315 can be used to gather relatively wide-angled images of a plot of land (like imaging device 15 of FIG. 1), while imaging device 320 can be used to gather magnified images of a particular object on a more continuous basis (like imaging device 20 of FIG. 1). The image path of imaging device 320 can intersect with the image path of imaging device 315. Components of the imaging devices 315, 320 can be housed in housings. In some embodiments, the housings can be integrally formed of the same material. In the embodiment of FIG. 2, the housing of imaging device 320 can extend from both sides of the housing of imaging device 315. The imaging devices 315, 320 can share common space where their respective image paths intersect. In this way, the image path of imaging device 315 can be generally unobstructed by components associated with imaging device 320 (including its housing), and vice versa. Imaging device configurations like those in FIG. 2 can conserve space and weight and/or can provide additional flexibility in determining imaging device orientations.

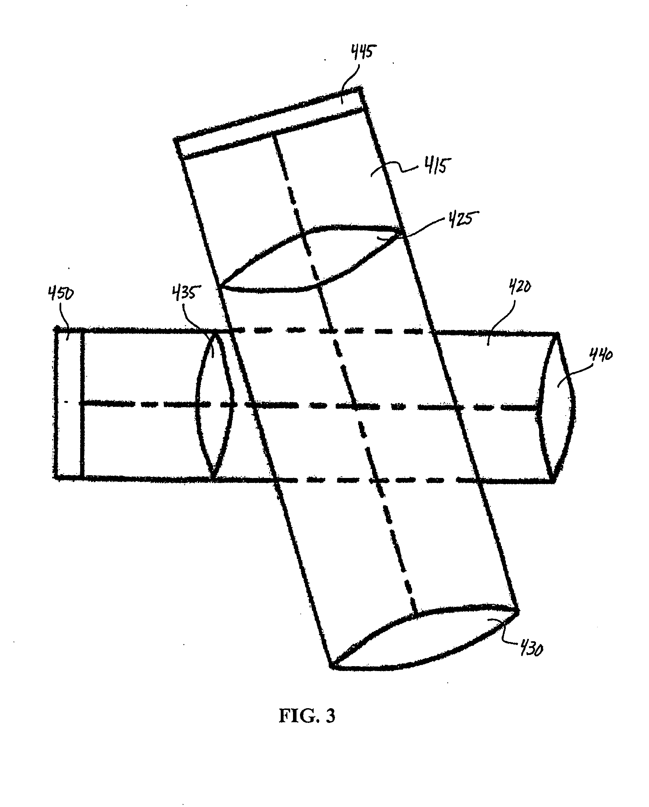

FIG. 3 shows a schematic, cross-sectional view of an imaging device configuration similar to that of FIG. 2. Referring again to FIG. 3, the image path of imaging device 420 can intersect with the image path of imaging device 415. Components of the imaging devices 415, 420 can be housed in housings. In some embodiments, the housings can be integrally formed of the same material. In the embodiment of FIG. 3, the housing of imaging device 420 can extend from both sides of the housing of imaging device 415. The imaging devices 415, 420 can share common space where their respective image paths intersect. In this way, the image path of imaging device 415 can be generally unobstructed by components associated with imaging device 420 (including its housing), and vice versa. FIG. 3 also shows sensors 445, 450, such as those discussed elsewhere herein, that correspond to the imaging devices 415, 420.

In many embodiments, the space shared by the two imaging devices 415, 420 is free from impediments. In the embodiment of FIG. 3, the optical elements 425, 430 (along with relevant support structure) of imaging device 415 and the optical elements 435, 440 of imaging device 420 are positioned outside of the common space. The optical elements 425, 430, 435, 440 can be any of the optical elements discussed elsewhere herein or any other suitable optical element. Embodiments in which one or more optical elements (or other impediments, such as relevant support structure) are positioned in the common space may be useful in situations in which high-quality displays are less of a premium.

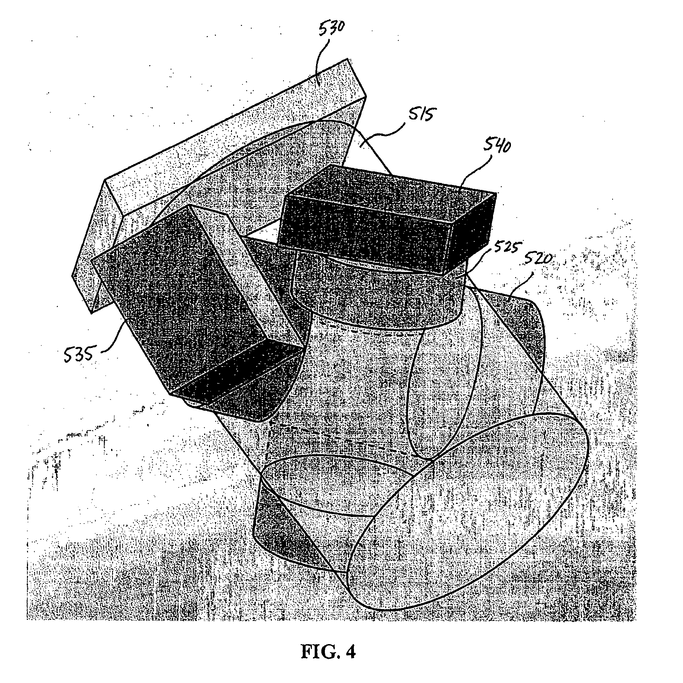

FIG. 4 shows a perspective view of three imaging devices 515, 520, 525, along with their corresponding sensors 530, 535, 540, that can be used in some imaging systems. As in FIGS. 1-2, the respective image paths of the imaging devices 515, 520, 525 are non-parallel. As an example of how such an imaging system is used, a stationary surveillance camera (constrained by, e.g., weight, space, and/or orientation, due to external factors) may provide images from three different image paths to a user in any desired sequence. The image paths of imaging devices 515, 520, 525 intersect with one another. Components of the imaging devices 515, 520, 525 can be housed in housings. In some embodiments, the housings can be integrally formed of the same material. In the embodiment of FIG. 4, the housings of imaging devices 520, 525 can extend from both sides of the housing of imaging device 515. The imaging devices 515, 520, 525 can share common space where their respective image paths intersect. In this way, the image path of imaging device 515 can be generally unobstructed by components associated with imaging devices 520, 525 (including their housings), the image path of imaging device 520 can be generally unobstructed by components associated with imaging devices 515, 525 (including their housings), and the image path of imaging device 525 can be generally unobstructed by components associated with imaging devices 515, 520 (including their housings). Like the imaging device configuration of FIG. 2, imaging device configurations like those in FIG. 4 can conserve space and weight and/or can provide additional flexibility in determining imaging device orientations.

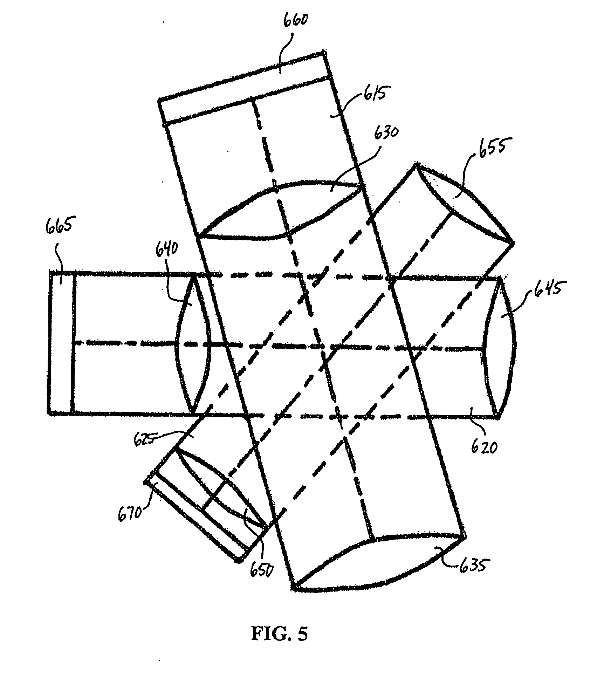

FIG. 5 shows a schematic, cross-sectional view of an imaging device configuration similar to that of FIG. 4. Referring again to FIG. 5, the image paths of imaging devices 615, 620, 625 intersect with one another. Components of the imaging devices 615, 620, 625 can be housed in housings. In some embodiments, the housings can be integrally formed of the same material. In the embodiment of FIG. 5, the housings of imaging devices 620, 625 can extend from both sides of the housing of imaging device 615. The imaging devices 615, 620, 625 can share common space where their respective image paths intersect. In this way, the image path of imaging device 615 can be generally unobstructed by components associated with imaging devices 620, 625 (including their housings), the image path of imaging device 620 can be generally unobstructed by components associated with imaging devices 615, 625 (including their housings), and the image path of imaging device 625 can be generally unobstructed by components associated with imaging devices 615, 620 (including their housings). Although the housings of the three imaging devices 615, 620, 625 of FIG. 5 all lie in the same plane, in many embodiments involving three or more imaging devices, the housings need not be coplanar. FIG. 5 also shows sensors 660, 665, 670, such as those discussed elsewhere herein, that correspond to the imaging devices 615, 620, 630.

In many embodiments, the space shared by the three imaging devices 615, 620, 625 is free from impediments. In the embodiment of FIG. 5, the optical elements 630, 635 of imaging device 615, the optical elements 640, 645 of imaging device 620, and the optical elements 650, 655 of imaging device 625, along with relevant support structure, are positioned outside of the common space. Optical elements that can be incorporated into systems like that shown in FIG. 5 are the same as those discussed in connection with FIG. 3. Like the configuration of FIG. 3, embodiments in which one or more optical elements (or other impediments, such as relevant support structure) are positioned in the common space may be useful in situations in which high-quality displays are less of a premium.

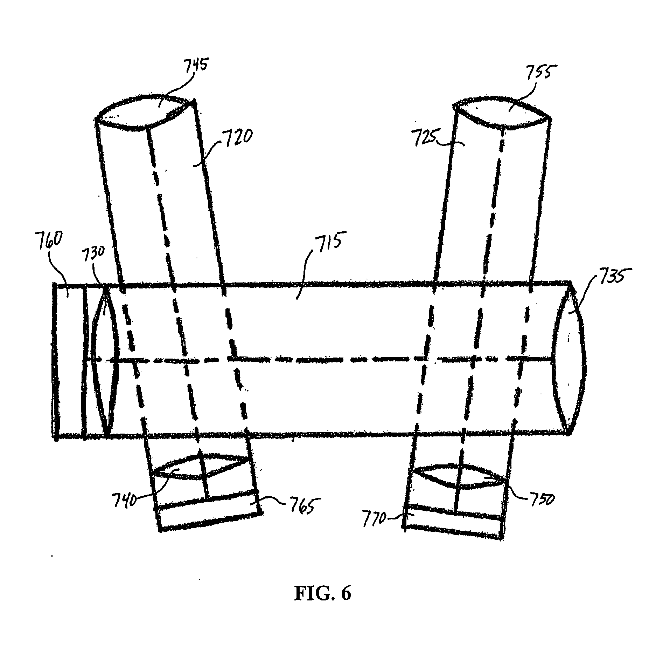

FIG. 6 shows a schematic, cross-sectional view of another exemplary imaging device configuration for use in some imaging systems. The image paths of imaging devices 720, 725 can intersect with the image path of imaging device 715. Components of the imaging devices 715, 720, 725 can be housed in housings. In some embodiments, the housings can be integrally formed of the same material. In the embodiment of FIG. 6, the housings of imaging devices 720, 725 can extend from both sides of the housing of imaging device 715. Imaging device 720 can share common space with imaging device 715 where their respective image paths intersect, and imaging device 725 can share common space with imaging device 715 where their respective image paths intersect. In this way, (a) the image path of imaging device 720 can be generally unobstructed by components associated with imaging device 715 (including its housing), and vice versa, and (b) the image path of imaging device 725 can be generally unobstructed by components associated with imaging device 715 (including its housing), and vice versa. In some embodiments, imaging device 720 and imaging device 725 can share no common space with each other. Although the housings of the three imaging devices 715, 720, 725 of FIG. 6 all lie in the same plane, in many embodiments involving three or more imaging devices, the housings need not be coplanar. FIG. 6 also shows sensors 760, 765, 770, such as those discussed elsewhere herein, that correspond to the imaging devices 715, 720, 730.

The embodiment of FIG. 6 includes two common spaces, one at the intersection of the image path of imaging device 715 and the image path of imaging device 720 and another at the intersection of the image path of imaging device 715 and the image path of imaging device 725. Like the embodiments discussed in connection with FIGS. 2-5, the common spaces of FIG. 6 can be free from impediments. In the embodiment of FIG. 6, the optical elements 730, 735 of imaging device 715, the optical elements 740, 745 of imaging device 720, and the optical elements 750, 755 of imaging device 725, along with relevant support structure, are positioned outside of the common spaces. Optical elements that can be incorporated into systems like that shown in FIG. 6 are the same as those discussed in connection with FIGS. 3 & 5. Like the configurations of FIGS. 3 & 5, embodiments in which one or more optical elements (or other impediments, such as relevant support structure) are positioned in the common space may be useful in situations in which high-quality displays are less of a premium.

Many additional imaging system configurations are possible. As discussed above, any number of imaging devices can be used, depending on the particular application or other factors. Likewise, the imaging devices can be any kind (e.g., fixed focal length, fixed focus, etc.) and any size. In some embodiments, all of the imaging devices in an imaging system are the same kind. In some embodiments, each imaging device in an imaging system differs from every other imaging device in that imaging system. Many combinations of imaging devices are possible. The imaging devices can be configured to gather infrared images, visible light images, and images from any other suitable wavelength. In many embodiments, an imaging system can include a combination of imaging devices configured to gather different types of images. For example, in some embodiments, a first imaging device can gather infrared images, a second imaging device can gather visible light images, a third imaging device can gather ultraviolet images, and so on. In some embodiments, the housing of a first imaging device extends from only one side of the housing of a second imaging device. In such embodiments, the housing of the second imaging device can be partially open to allow electromagnetic energy into the housing of the first imaging device. In some embodiments, several secondary imaging devices intersect with a primary imaging device while only some of the secondary imaging devices intersect with each other. In some embodiments, multiple imaging devices can share common space proximate either the sensor end or the light-entrance end of their respective housings. In many embodiments, the intersection of two image paths can be located anywhere along the length of either imaging device housing.

In some embodiments, electromagnetic energy can be gathered from multiple directions without creating images of the energy. For example, a detector (e.g., a motion detector) can gather electromagnetic energy from multiple, non-parallel paths. Components of the multiple energy paths can be housed by multiple housings. In many embodiments, the housings can be integrally formed of the same material. For purposes of saving space, or for other reasons discussed herein or for other similar reasons, the energy paths can cross. In such embodiments, each energy path can be generally unobstructed by the other energy paths' housings, by other components associated with the other energy paths, or by other components.

Systems that are discussed in this document can be implemented in assemblies other than air vehicles. For example, systems are often implemented in security cameras, unattended ground sensors, automotive vision systems, night vision goggles, other types of cameras, and other applications that benefit from having multiple non-parallel energy paths.

Thus, embodiments of the integrated multiple imaging device are disclosed. One skilled in the art will appreciate that the integrated multiple imaging device can be practiced with embodiments other than those disclosed. The disclosed embodiments are presented for purposes of illustration and not limitation, and the present invention is limited only by the claims that follow.

## Claims

1. An imaging system, comprising:
a first imaging device configured to capture a first image from a first image path, the first imaging device comprising a first optical element and a first housing; and
a second imaging device configured to capture a second image from a second image path, which intersects with and is non-parallel to the first image path, the second imaging device comprising a second optical element and a second housing.

2. The imaging system of claim 1, wherein the first housing and the second housing are integrally formed of the same material.

3. The imaging system of claim 1 or claim 2, wherein the first imaging device further comprises a third optical element, and the second imaging device further comprises a fourth optical element.

4. The imaging system of any one of the preceding claims in which at least one of the optical elements comprise infrared optical elements.

5. The imaging system of any one of the preceding claims, wherein the first image path is generally unobstructed by components other than those associated with the first imaging device.

6. The imaging system of any one of the preceding claims, wherein the second image path is generally unobstructed by components other than those associated with the second imaging device.

7. The imaging system of any one of the preceding claims, further comprising a third imaging device configured to capture a third image from a third image path, which intersects with and is non-parallel to the first image path, the third imaging device comprising a third optical element and a third housing.

8. The imaging system of claim 7, wherein the third image path intersects with and is non-parallel to the second image path.

9. The imaging system of claim 7 or claim 8, wherein the first, second, and third image paths are coplanar.

10. The imaging system of any one of claims 7 to 9, wherein the third image path is generally unobstructed by components other than those associated with the third imaging device.

11. The imaging system of any one of the preceding claims, wherein the first imaging device has a first focal length and the second imaging device has a second focal length that differs from the first focal length.

12. An assembly for gathering images, comprising:
a first imaging device configured to gather light from a first image path, the first imaging device comprising a first optical element and a first housing;
a second imaging device configured to gather light from a second image path, which intersects with and is non-parallel to the first image path, the second imaging device comprising a second optical element and a second housing;
a first plurality of sensors, the first imaging device being configured to focus the light gathered from the first image path on the first plurality of sensors, and the first plurality of sensors being configured to create a first electrical signal that corresponds to the light from the first image path; and
a second plurality of sensors, the second imaging device being configured to focus the light gathered from the second image path on the second plurality of sensors, and the second plurality of sensors being configured to create a second electrical signal that corresponds to the light from the second image path.

13. The assembly of claim 0, wherein the first housing and the second housing are integrally formed of the same material.

14. The assembly of claim 12 or claim 13, further comprising an air vehicle.

15. The assembly of any one of claims 12 to 14, wherein the first imaging device further comprises a third optical element.

16. The assembly of claim 15 wherein the first and third optical elements comprise infrared optical elements.

17. The assembly of any one of claims 12 to 16, wherein the first image path is generally unobstructed by components other than those associated with the first imaging device and the second image path is generally unobstructed by components other than those associated with the second imaging device.

18. The assembly of any one of claims 12 to 17, wherein the first imaging device has a first focal length and the second imaging device has a second focal length that differs from the first focal length.

19. A system, comprising:
a first detection device configured to gather electromagnetic energy from a first energy path, the first detection device comprising a first housing; and
a second detection device configured to gather electromagnetic energy from a second energy path, which intersects with and is non-parallel to the first energy path, the second detection device comprising a second housing.

20. The system of claim 19, wherein the first housing and the second housing are integrally formed of the same material.

21. The system of claim 19 or claim 20, wherein the first detection device further comprises a first optical element, and the second detection device further comprises a second optical element.

22. The system of claim 21, wherein the first and/or second optical element comprises an infrared optical element.

23. The system of any one of claims 19 to 22, wherein the first and/or second energy path is generally unobstructed by components other than those associated with the first detection device.

24. The system of any one of claims 19 to 23, further comprising a third detection device configured to capture electromagnetic energy from a third energy path, which intersects with and is non-parallel to the first energy path, the third detection device comprising a third housing.

25. The system of claim 24, wherein the third energy path intersects with and is non-parallel to the second energy path.

26. The system of claim 24 or claim 25, wherein the first, second, and third energy paths are coplanar.
